# EUROPÄISCHE PATENTSCHRIFT

(11) **EP 2 731 840 B1**
(45) Veröffentlichungstag und Bekanntmachung des Hinweises auf die Patenterteilung: **23.03.2016**
(21) Anmeldenummer: 12727378.7
(22) Anmeldetag: 14.06.2012
(51) Int. Cl.: B60W 20/00, B60W 10/06, B60W 10/02, B60W 30/18, B60K 6/48

(54) **VERFAHREN ZUR STEUERUNG EINES HYBRIDANTRIEBSSTRANGS EINES KRAFTFAHRZEUGS**
METHOD FOR CONTROLLING A HYBRID DRIVE TRAIN OF A MOTOR VEHICLE
PROCÉDÉ DE COMMANDE D'UNE CHAÎNE CINÉMATIQUE HYBRIDE D'UN VÉHICULE AUTOMOBILE

(30) Priorität: 13.07.2011 DE 102011079079
(43) Veröffentlichungstag der Anmeldung: 21.05.2014
(73) Patentinhaber: ZF Friedrichshafen AG, 88038 Friedrichshafen (DE)
(72) Erfinder: SCHOLZ, Jakob, 40477 Düsseldorf (DE); ZÖLLNER, Tobias, 88131 Lindau (DE); BACHER, Holger, 88131 Lindau (DE)
(86) Internationale Anmeldenummer: PCT/EP2012/061319
(87) Internationale Veröffentlichungsnummer: WO 2013/007464

(56) Entgegenhaltungen:
- DE-A1-102007 050 774
- FR-A1- 2 887 496
- FR-A1- 2 954 255
- US-A1- 2009 156 355

## Beschreibung

Die Erfindung betrifft ein Verfahren zur Steuerung eines Hybridantriebsstrangs eines Kraftfahrzeugs gemäß dem Oberbegriff des Patentanspruchs 1. Ein solches Verfahren ist aus DE 10 2007 050 774 bekannt.

Ein solcher Hybridantriebsstrangs eines Kraftfahrzeugs verfügt über einen Verbrennungsmotor mit einer Triebwelle, ein in seiner Übersetzung verstellbares Fahrgetriebe mit einer Getriebeeingangswelle und eine mit einem Achs- oder Verteilergetriebe in Triebverbindung stehenden Getriebeausgangswelle, eine zumindest als Motor betreibbare Elektromaschine mit einem mit der Getriebeeingangswelle in Triebverbindung stehenden Rotor, und eine zwischen der Triebwelle des Verbrennungsmotors und der Getriebeeingangswelle angeordnete, als automatisierte Reibungskupplung ausgebildete Trennkupplung. Bei einem solchen Hybridantriebsstrang wird ausgehend von einem Elektrofahrbetrieb mit geöffneter Trennkupplung beim Auftreten einer erhöhten Leistungsanforderung der zuvor gestartete Verbrennungsmotor durch eine Beschleunigung auf die Getriebeeingangsdrehzahl und durch das Schließen der Trennkupplung an die Getriebeeingangswelle angekoppelt.

Ein parallel-wirksamer Hybridantriebsstrang der vorbezeichneten Art ist allgemein bekannt und kann als Standardbauweise eines Parallelhybridantriebs angesehen werden. Er weist den Vorteil auf, dass das betreffende Kraftfahrzeug wahlweise im reinen Elektrofahrbetrieb mit abgestelltem Verbrennungsmotor, im reinen Verbrennungsfahrbetrieb mit kraftlos geschalteter Elektromaschine, und im Hybridfahrbetrieb mit kombiniertem Antrieb durch den Verbrennungsmotor und die Elektromaschine gefahren werden kann. Im Verbrennungsfahrbetrieb kann die Elektromaschine bedarfsweise auch als Generator betrieben und der dabei erzeugte Strom zur Versorgung eines elektrischen Bordnetzes und/oder zur Ladung eines elektrischen Energiespeichers verwendet werden. Generell kann die Elektromaschine auch beim Abbremsen des Kraftfahrzeugs als Generator betrieben und die dabei zurückgewonnene Bewegungsenergie in einem elektrischen Energiespeicher gespeichert werden.

Das Fahrgetriebe ist bevorzugt automatisiert steuerbar ausgebildet, wobei die zwischen der Eingangswelle und der Ausgangswelle wirksame Übersetzung entweder stufenweise oder kontinuierlich verstellbar sein kann. Bei dem Fahrgetriebe kann es sich somit um ein mit Zugkraftunterbrechung schaltbares automatisiertes Schaltgetriebe, um ein ohne Zugkraftunterbrechung schaltbares Planeten-Automatgetriebe oder um ein stufenlos verstellbares Getriebe handeln.

Tritt bei einem derartigen Hybridantriebsstrang im Elektrofahrbetrieb eine erhöhte Leistungsanforderung auf, die von der Elektromaschine alleine nicht mehr erfüllt werden kann, soll der Verbrennungsmotor gestartet und an die Eingangswelle angekoppelt werden, um das Kraftfahrzeug nachfolgend im Verbrennungsfahrbetrieb alleine oder zusammen mit der Elektromaschine, d.h. im Hybridfahrbetrieb, mit einer entsprechend erhöhten Zugkraft anzutreiben.

Im Fahrpedalbetrieb des Kraftfahrzeugs wird eine erhöhte Leistungsabgabe der Antriebsaggregate, also der Elektromaschine und des Verbrennungsmotors, mit einem stärkeren Durchtreten des Fahrpedals durch den Fahrer angefordert, z.B. um das Kraftfahrzeug zur Durchführung eines Überholvorgangs zu beschleunigen. Beim Betrieb des Fahrzeugs mit einer aktivierten Geschwindigkeitsregelanlage kann eine erhöhte Leistungsabgabe der Antriebsaggregate beispielsweise bei einer Einfahrt in eine Steigungsstrecke durch die Geschwindigkeitsregelanlage angefordert werden, um die vorgegebene Sollgeschwindigkeit beibehalten zu können.

Eine hierzu nicht mehr ausreichende Leistungsabgabe der Elektromaschine kann aufgrund eines konstruktiv vorgegebenen maximalen Drehmomentes der Elektromaschine und/oder aufgrund eines nicht mehr ausreichend geladenen elektrischen Energiespeichers vorliegen. Beim Auftreten einer erhöhten Leistungsanforderung kann zur Erhöhung der Zugkraft insbesondere des Verbrennungsmotors auch eine Rückschaltung bzw. eine Erhöhung der Übersetzung des Fahrgetriebes erfolgen, wobei diese Übersetzungsänderung vor, während oder nach der Ankopplung des Verbrennungsmotors durchgeführt werden kann.

Wenn eine erhöhte Leistungsanforderung auftritt, die das Zuschalten des Verbrennungsmotors auslöst, so wird zunächst der Verbrennungsmotor gestartet und dieser danach zur Erzielung eines möglichst schlupfarmen und weitgehend ruckfreien Schließens der Trennkupplung in etwa auf die Getriebeeingangsdrehzahl beschleunigt, bevor die Trennkupplung weitgehend geschlossen und damit der Verbrennungsmotor an die Getriebeeingangswelle angekoppelt wird.

Das Starten des Verbrennungsmotors kann bei geöffneter Trennkupplung über einen speziellen Anlasser erfolgen, der permanent mit der Triebwelle des Verbrennungsmotors in Triebverbindung steht. Der Verbrennungsmotor kann jedoch auch in Verbindung durch ein teilweises Schließen der Trennkupplung in einem Schleppstart durch die Elektromaschine gestartet werden, wobei die Elektromaschine bevorzugt ein erhöhtes Drehmoment abgibt, und die Trennkupplung nach dem Erreichen einer Mindeststartdrehzahl und dem verbrennungsmotorischen Anlaufen des Verbrennungsmotors wieder geöffnet wird. Außerdem kann der Verbrennungsmotor auch in einem Impulsstart durch die Elektromaschine gestartet werden, wobei das Fahrgetriebe jedoch z. B. durch das Auslegen des aktuellen Lastgangs bei einem automatisierten Vorgelege-Schaltgetriebe oder durch das Öffnen eines lastführenden Reibschaltelementes eines Planeten-Automatgetriebes vorübergehend geöffnet werden muss, und die Trennkupplung nach einer Beschleunigung der Elektromaschine schnell geschlossen und nach dem verbrennungsmotorischen Anlaufen des Verbrennungsmotors wieder geöffnet wird.

Die Beschleunigung des Verbrennungsmotors auf die Getriebeeingangsdrehzahl, d. h. die Synchrondrehzahl an der Trennkupplung, sollte möglichst schnell erfolgen, damit die zumeist von dem Fahrer angeforderte Erhöhung des Antriebsmomentes ohne große zeitlich Verzögerung eintritt. Wenn die Beschleunigung des Verbrennungsmotors selbsttätig, also durch eine entsprechende Steuerung oder Regelung des verbrennungsmotorischen Betriebs des Verbrennungsmotors erfolgt, wird zur Erzielung eines hohen Drehzahlgradienten zunächst das von dem Verbrennungsmotor erzeugte Drehmoment stark erhöht und nachfolgend zur Vermeidung eines Überschießens der Zieldrehzahl unter Umständen bis auf Null reduziert.

Da das aus der starken Beschleunigung des Verbrennungsmotors resultierende, an dessen Triebwelle wirksame Massenträgheitsmoment relativ groß und schwer beherrschbar ist, besteht das Problem, die Synchronisierung des Verbrennungsmotors schnell sowie ohne ein Überschießen über die Zieldrehzahl möglichst exakt durchzuführen. Andererseits soll auch der Lastaufbau des Verbrennungsmotors nach oder während des Schließens der Trennkupplung möglichst schnell erfolgen, dem aber der gegebenenfalls vollständige Abbau des erzeugten Drehmomentes zur Beendigung der Beschleunigung entgegensteht.

Zur Umgehung dieser Probleme ist in Verfahren zur Steuerung eines entsprechenden Hybridantriebsstrangs gemäß der DE 198 14 402 C2 und der DE 102 04 981 A1 jeweils vorgesehen, dass der Verbrennungsmotor mittels einer mit seiner Triebwelle in Verbindung stehenden zweiten Elektromaschine, z.B. eines Kurbelwellen-Starter-Generators, auf die Synchrondrehzahl der Trennkupplung, also auf die Getriebeeingangsdrehzahl geführt wird.

In dem in der DE 198 14 402 C2 beschriebenen Verfahren ist vorgesehen, dass der Verbrennungsmotor mittels der zweiten Elektromaschine weitgehend exakt auf die aktuelle Getriebeeingangsdrehzahl beschleunigt und anschließend durch das Schließen der Trennkupplung an die Getriebeeingangswelle angekoppelt wird. Eine während des Schließvorgangs der Trennkupplung mögliche, durch eine Beschleunigung oder Verzögerung des Kraftfahrzeugs verursachte Änderung der Getriebeeingangsdrehzahl bleibt bei diesem Verfahren unberücksichtigt.

Bei dem Verfahren nach der DE 102 04 981 A1 ist dagegen vorgesehen, dass der Verbrennungsmotor mittels der zweiten Elektromaschine auf eine über der aktuellen Getriebeeingangsdrehzahl liegende Zieldrehzahl beschleunigt wird, bevor die Trennkupplung geschlossen wird. Hierdurch wird erreicht, dass die Trennkupplung während des Schließens der Trennkupplung ein Drehmoment von der Triebwelle des Verbrennungsmotors auf die Getriebeeingangswelle übertragen kann, wodurch ein als unkomfortabler Ruck wahrnehmbarer Lastwechsel zwischen einem Schubbetrieb und einem Zugbetrieb des Verbrennungsmotors vermieden wird.

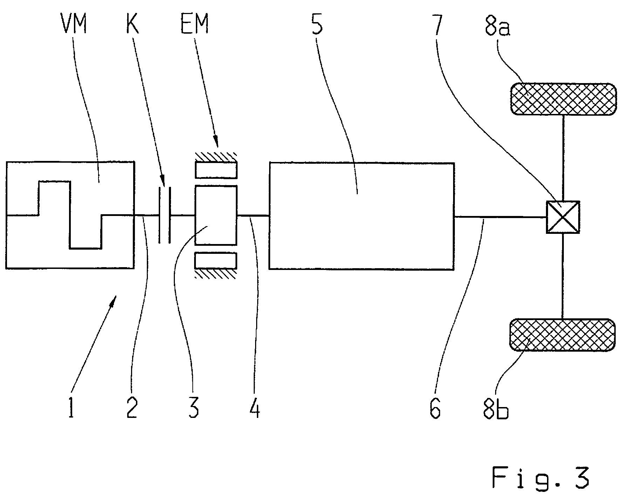

Dagegen ist in der DE 10 2007 050 774 A1 ein Verfahren zur Steuerung eines entsprechenden Hybridantriebsstrangs beschrieben, bei dem der Verbrennungsmotor im Rahmen einer Drehzahlregelung selbsttätig, d. h. ohne die Führung durch einen Hilfsantrieb, auf die aktuelle Getriebeeingangsdrehzahl oder auf eine gegenüber dieser um einen Vorhaltewert erhöhte Drehzahl beschleunigt wird, bevor die Trennkupplung bis an den Haftpunkt geschlossen und anschließend unter weiterem Schließen der Trennkupplung die Drehmomentführung von der Elektromaschine auf den Verbrennungsmotor übergeht. Den Drehmomentverläufen des mittleren Zeitdiagramms der dortigen Fig. 3 ist zu entnehmen, dass die Beschleunigung des Verbrennungsmotors auf die Getriebeeingangsdrehzahl und das Schließen der Trennkupplung bis an den Haftpunkt relativ lang dauert, und dass das von dem Verbrennungsmotor zur Beschleunigung erzeugte Drehmoment zur Begrenzung des Drehzahlanstiegs wieder bis auf Null abgebaut wird, was den nachfolgenden Lastaufbau des Verbrennungsmotors erschwert und verzögert.

Der vorliegenden Erfindung liegt daher die Aufgabe zugrunde, ein verbessertes Verfahren zur Steuerung eines Hybridantriebsstrangs eines Kraftfahrzeugs der eingangs genannten Art anzugeben, mit dem der Verbrennungsmotor selbsttätig, d. h. ohne die Führung durch einen Hilfsantrieb, schneller und zugleich komfortabel auf die Getriebeeingangsdrehzahl beschleunigt und durch das Schließen der Trennkupplung an die Eingangswelle angekoppelt werden kann.

Diese Aufgabe ist in Verbindung mit den Merkmalen des Oberbegriffs des Anspruchs 1 dadurch gelöst,
- dass in einer ersten Phase der Verbrennungsmotor mit einer Drehzahlregelung in Richtung auf eine über der aktuellen Getriebeeingangsdrehzahl liegende Zieldrehzahl beschleunigt wird, bis eine unter der Zieldrehzahl liegende Referenzdrehzahl erreicht oder überschritten ist, während die Trennkupplung dabei weitgehend geöffnet bleibt,
- dass in einer zweiten Phase der Verbrennungsmotor unter Fortführung der Drehzahl-regelung auf eine über der aktuellen Getriebeeingangsdrehzahl liegende korrigierte Zieldrehzahl eingestellt wird, während die Trennkupplung bis zur Einstellung eines Zielmomentes des Verbrennungsmotors geschlossen wird,
- dass in einer dritten Phase der Verbrennungsmotor mit einer Drehmomentsteuerung auf das Zielmoment eingestellt wird, während die Trennkupplung mit einer Differenzdrehzahlregelung auf eine Zieldrehzahldifferenz eingeregelt wird, und
- dass in einer vierten Phase unter Fortführung der Drehmomentsteuerung des Verbrennungsmotors die Trennkupplung auf einen für den Dauerbetrieb vorgesehenen Schließzustand eingestellt oder eingeregelt.

Die Erfindung geht demnach aus von einem an sich bekannten Hybridantriebsstrang eines Kraftfahrzeugs, der einen Verbrennungsmotor mit einer Triebwelle, ein in seiner Übersetzung verstellbares Fahrgetriebe mit einer Getriebeeingangswelle und einer mit einem Achs- oder Verteilergetriebe in Triebverbindung stehenden Getriebeausgangswelle, eine zumindest als Motor betreibbare Elektromaschine mit einem mit der Getriebeeingangswelle in Triebverbindung stehenden Rotor, und eine zwischen der Triebwelle des Verbrennungsmotors und der Getriebeeingangswelle angeordnete, als automatisierte Reibungskupplung ausgebildete Trennkupplung aufweist.

Um ausgehend von einem Elektrofahrbetrieb mit geöffneter Trennkupplung bei Auftreten einer erhöhten Leistungsanforderung den zuvor gestarteten Verbrennungsmotor möglichst schnell und komfortabel, d.h. ruckarm, durch eine Beschleunigung auf die Getriebeeingangsdrehzahl und durch das Schließen der Trennkupplung an die Getriebeeingangswelle anzukoppeln, ist erfindungsgemäß vorgesehen, dass in einer ersten Phase zunächst der Verbrennungsmotor mit einer Drehzahlregelung in Richtung auf eine über der aktuellen Getriebeeingangsdrehzahl liegende Zieldrehzahl beschleunigt wird, während die Trennkupplung weitgehend geöffnet bleibt.

Wenn eine unter der Zieldrehzahl liegende Referenzdrehzahl erreicht oder überschritten ist, d. h. vor Erreichen der Zieldrehzahl, wird in einer zweiten Phase damit begonnen, die Trennkupplung bis zur Einstellung eines Zieldrehmomentes des Verbrennungsmotors zu schließen, während der Verbrennungsmotor unter Fortführung der Drehzahlregelung auf eine über der aktuellen Getriebeeingangsdrehzahl liegende korrigierte Zieldrehzahl eingestellt wird. Da der Verbrennungsmotor schon vor dem Erreichen der Zieldrehzahl bzw. der korrigierten Zieldrehzahl durch das Schließen der Trennkupplung mit einem Lastmoment beaufschlagt wird, verhindert die aktive Drehzahlregelung des Verbrennungsmotors ein starkes Absinken des zuvor für die Beschleunigung des Verbrennungsmotors aufgebauten Motormomentes. Die Beschleunigung des Verbrennungsmotors auf die Getriebeeingangsdrehzahl und der Lastaufbau des Verbrennungsmotors zur zumindest teilweisen Übernahme des Antriebsmomentes des Kraftfahrzeugs erfolgen somit im Gegensatz zu bekannten Verfahren zeitlich überschnitten und deshalb schneller. Zudem wird hierdurch ein bei einem seriellen Ablauf der Beschleunigung und des Lastaufbaus des Verbrennungsmotors auftretender, als Ruck wahrnehmbarer Drehmomenteinbruch des Verbrennungsmotors vermieden.

In einer dritten Phase wird der Verbrennungsmotor dann anstelle der zuvor durchgeführten Drehzahlregelung nun mit einer Drehmomentsteuerung auf das Zielmoment eingestellt, während die Trennkupplung anstelle der zuvor durchgeführten Schließsteuerung mit einer Differenzdrehzahlregelung auf eine Zieldrehzahldifferenz eingeregelt wird.

Danach wird in einer vierten Phase unter Fortführung der Drehmomentsteuerung des Verbrennungsmotors die Trennkupplung auf einen für den Dauerbetrieb vorgesehenen Schließzustand eingestellt oder eingeregelt wird.

Die Trennkupplung wird zur Erzielung eines schnellen Ansprechverhaltens in der zweiten Phase während der ersten Phase in ihrem Anlegepunkt gehalten, wenn sie zu Beginn der ersten Phase, z.B. nach erfolgtem Schlepp- oder Impulsstart des Verbrennungsmotors, schon bis zum Anlegepunkt geschlossen ist, oder bis zum Anlegepunkt geschlossen, wenn sie zu Beginn der ersten Phase, z.B. aufgrund eines mit einem speziellen Anlasser erfolgten Fremdstart des Verbrennungsmotors, vollständig geöffnet ist.

Um einerseits ein starkes Überschwingen der Motordrehzahl über die Getriebeeingangsdrehzahl zu vermeiden und um andererseits genügend Spielraum zur Einregelung sowie Einstellung der Motordrehzahl zu erreichen, ist die Zieldrehzahl des Verbrennungsmotors bevorzugt um einen Drehzahloffset von etwa 50 bis 200 Umdrehungen pro Minute über der Getriebeeingangsdrehzahl zu Beginn der ersten Phase erhöht festgelegt. Durch einen hinreichend großen Drehzahloffset soll auch erreicht werden, dass sich die Motordrehzahl während des Schließens der Trennkupplung der Getriebeeingangsdrehzahl von größeren Drehzahlwerten her annähert, da hierdurch ein als unkomfortabler Ruck wahrnehmbarer Lastwechsel an der Trennkupplung vermieden wird. Bekanntlich kann eine schlupfende Reibungskupplung ein Drehmoment nur von dem schneller drehenden Kupplungsteil auf das langsamer drehende Kupplungsteil übertragen. Bei einer Annäherung der Motordrehzahl an die Getriebeeingangsdrehzahl ausgehend von geringeren Drehzahlwerten würde die Trennkupplung somit zunächst ein Drehmoment von der Getriebeeingangswelle in die Triebwelle des Verbrennungsmotors übertragen, bevor die Trennkupplung nach der Überschreitung des Haftpunktes der Trennkupplung ein Drehmoment von dem Verbrennungsmotor in die Getriebeeingangswelle übertragen würde.

Die Solldrehzahl der Drehzahlregelung des Verbrennungsmotors kann zu Beginn der ersten Phase wahlweise sprunghaft oder stetig, vorzugsweise rampenförmig von der aktuellen Motordrehzahl, d. h. der Leerlaufdrehzahl, auf die Zieldrehzahl erhöht werden. Eine sprunghafte Erhöhung der Solldrehzahl führt zwangsläufig zu einem steileren und somit schnelleren Drehzahlanstieg des Verbrennungsmotors mit stärkerer Tendenz zum Überschießen der Zieldrehzahl. Dagegen bewirkt eine stetige bzw. rampenförmige Erhöhung der Solldrehzahl einen flacheren und somit langsameren Drehzahlanstieg des Verbrennungsmotors, jedoch mit schwächerer Tendenz zum Überschießen der Zieldrehzahl.

Zur Erzielung eines optimalen Beginns des Schließvorgangs der Trennkupplung ist die Referenzdrehzahl zur Beendigung der ersten Phase zweckmäßig in Relation zur aktuellen Getriebeeingangsdrehzahl definiert und kann somit der aktuellen Getriebeeingangsdrehzahl entsprechen oder um einen festgelegten Drehzahloffset über oder unter der aktuellen Getriebeeingangsdrehzahl liegen.

Die korrigierte Zieldrehzahl der Drehzahlregelung des Verbrennungsmotors kann ab dem Beginn der zweiten Phase in einem konstanten Drehzahlabstand zu der Getriebeeingangsdrehzahl gehalten werden.

Um die Drehzahldifferenz an der Trennkupplung und damit die thermische Belastung der Trennkupplung zu reduzieren, kann jedoch auch vorgesehen sein, dass die korrigierte Zieldrehzahl der Drehzahlregelung des Verbrennungsmotors in der zweiten Phase auf einem niedrigeren, zwischen der Zieldrehzahl der ersten Phase und der aktuellen Getriebeeingangsdrehzahl liegenden Niveau gehalten wird. In diesem Fall wird die Solldrehzahl der Drehzahlregelung des Verbrennungsmotors zur Vermeidung von Instabilitäten zweckmäßig zu Beginn der zweiten Phase stetig, insbesondere rampenförmig von der Zieldrehzahl der ersten Phase auf die korrigierte Zieldrehzahl abgesenkt.

Das Zieldrehmoment des Verbrennungsmotors kann aus einem auf die Getriebeeingangswelle bezogenen Fahrerwunschmoment durch die Subtraktion des aktuellen Drehmomentes der Elektromaschine oder durch die Subtraktion des aktuellen Drehmomentes der Elektromaschine und eines festgelegten Offsetmomentes bestimmt werden. Das Fahrerwunschmoment wird üblicherweise aus der Fahrpedalstellung und/oder der Änderung der Fahrpedalstellung und/oder der Änderungsgeschwindigkeit der Fahrpedalstellung abgeleitet.

Der Schließvorgang der Trennkupplung erfolgt vorzugsweise derart, dass das durch das Schließen der Trennkupplung einzustellende Sollmoment der Trennkupplung zu Beginn der zweiten Phase stetig, insbesondere rampenförmig auf das Zielmoment des Verbrennungsmotors erhöht wird.

Um hierbei ein zu schnelles Schließen der Trennkupplung zu vermeiden, kann die Schließgeschwindigkeit der Trennkupplung durch die Einhaltung einer Mindestdrehzahldifferenz und/oder durch die Einhaltung eines maximalen Differenzdrehzahlgradienten zwischen den Bauteilen der beiden Kupplungsseiten begrenzt werden.

Da der Verbrennungsmotor in der zweiten Phase im Rahmen der Einregelung auf die korrigierte Zieldrehzahl im Wesentlichen das momentan an der Trennkupplung eingestellte übertragbare Drehmoment zuzüglich eines positiven oder negativen Regelmomentes zur Erhöhung oder Reduzierung der Motordrehzahl erzeugen muss, wird gemäß einer weiteren Ausführungsform der Erfindung in der zweiten Phase das durch den aktuellen Schließgrad der Trennkupplung bestimmte übertragbare Drehmoment der Trennkupplung als Vorsteuermoment oder als Teil eines Vorsteuermomentes der Drehzahlregelung des Verbrennungsmotors verwendet.

Die zweite Phase ist bevorzugt dann beendet, wenn der Verbrennungsmotor seine Zieldrehzahl innerhalb einer vorgegebenen Differenzdrehzahltoleranz erreicht hat, und wenn der Differenzdrehzahlgradient an der Trennkupplung im Betrag einen festgelegten Mindestdifferenzdrehzahlgradienten erreicht oder unterschritten hat, oder wenn die Differenz zwischen dem erzeugten Drehmoment des Verbrennungsmotors und dem übertragbaren Drehmoment der Trennkupplung im Betrag ein festgelegtes Mindestdifferenzmoment erreicht oder unterschritten hat.

Zur Reduzierung der thermischen Belastung der Trennkupplung ist die Zieldrehzahldifferenz der Differenzdrehzahlregelung der Trennkupplung bevorzugt kleiner als die Drehzahldifferenz zu Beginn der dritten Phase festgelegt.

Um die Zieldrehzahl möglichst schwingungsarm einzuregeln, wird die Solldrehzahldifferenz der Differenzdrehzahlregelung der Trennkupplung zu Beginn der dritten Phase bevorzugt stetig, insbesondere rampenförmig von der aktuellen Drehzahldifferenz auf die Zieldrehzahldifferenz abgesenkt.

Da die Trennkupplung in der dritten Phase während der Einregelung auf die Zieldrehzahldifferenz im Wesentlichen das momentan von dem Verbrennungsmotor abgegebene Drehmoment zuzüglich eines positiven oder negativen Regelmomentes zur Reduzierung oder Erhöhung der Drehzahldifferenz übertragen muss, wird in der dritten Phase bevorzugt das aktuelle Drehmoment des Verbrennungsmotors als Vorsteuermoment oder als Teil eines Vorsteuermomentes der Differenzdrehzahlregelung des Trennkupplung verwendet.

Die dritte Phase ist bevorzugt dann beendet, wenn die Drehzahldifferenz an der Trennkupplung die Zieldrehzahldifferenz innerhalb einer vorgegebenen Differenzdrehzahltoleranz erreicht hat.

In der vierten Phase wird die Trennkupplung vollständig geschlossen, sofern keine Dauerschlupfregelung der Trennkupplung vorgesehen ist, oder unter Weiterführung der Differenzdrehzahlregelung auf eine niedrigere, für einen Dauerschlupfbetrieb geeignete Zieldrehzahldifferenz eingeregelt, sofern eine Dauerschlupfregelung der Trennkupplung vorgesehen ist. Durch eine Dauerschlupfregelung der Trennkupplung können die von dem Verbrennungsmotor ausgehenden Drehschwingungen gedämpft werden, so dass ein hierzu ansonsten notweniger Drehschwingungsdämpfer eingespart und/oder eine entsprechende Ansteuerung der Elektromaschine hierzu unterlassen werden kann.

Zur Verdeutlichung der Erfindung ist der Beschreibung eine Zeichnung mit Ausführungsbeispielen beigefügt. In dieser zeigt
- Fig. 1a: relevante Drehzahlverläufe eines parallel-wirksamen Hybridantriebsstrangs nach Fig. 3 während eines ersten erfindungsgemäßen Steuerungsablaufs zum Ankoppeln eines Verbrennungsmotors,
- Fig. 1b: relevante Drehmomentverläufe des Hybridantriebsstrangs nach Fig. 3 während des ersten erfindungsgemäßen Steuerungsablaufs zum Ankoppeln des Verbrennungsmotors,
- Fig. 1c: der Schließgrad einer Trennkupplung des Hybridantriebsstrangs nach Fig. 3 während des ersten erfindungsgemäßen Steuerungsablaufs zum Ankoppeln des Verbrennungsmotors,
- Fig. 2a: relevante Drehzahlverläufe des parallel-wirksamen Hybridantriebsstrangs nach Fig. 3 während eines zweiten erfindungsgemäßen Steuerungsablaufs zum Ankoppeln eines Verbrennungsmotors,
- Fig. 2b: relevante Drehmomentverläufe des Hybridantriebsstrangs nach Fig. 3 während des zweiten erfindungsgemäßen Steuerungsablaufs zum Ankoppeln des Verbrennungsmotors,
- Fig. 2c: der Schließgrad einer Trennkupplung des Hybridantriebsstrangs nach Fig. 3 während des zweiten erfindungsgemäßen Steuerungsablaufs zum Ankoppeln des Verbrennungsmotors, und
- Fig. 3: eine schematische Ansicht eines parallel-wirksamen Hybridantriebsstrangs zur Anwendung des mit Hilfe der Figuren 1 a bis 1 c und 2a bis 2c weiter zu beschreibenden Steuerungsverfahrens.

In Fig. 3 ist in schematischer Form ein parallel-wirksamer Hybridantriebsstrang 1 eines Kraftfahrzeugs abgebildet, bei dem das nachfolgend beschriebene erfindungsgemäße Steuerungsverfahren anwendbar ist.

Der Hybridantriebsstrang 1 verfügt über einen Verbrennungsmotor VM mit einer Triebwelle 2, eine zumindest als Motor betreibbare Elektromaschine EM mit einem Rotor 3, und ein Fahrgetriebe 5 mit einer Getriebeeingangswelle 4 und einer Getriebeausgangswelle 6. Die Elektromaschine EM ist koaxial über der Getriebeeingangswelle 4 angeordnet und der Rotor 3 der Elektromaschine EM ist vorliegend beispielhaft unmittelbar drehfest mit der Getriebeeingangswelle 4 verbunden. Alternativ dazu könnte der Rotor 3 der Elektromaschine EM auch über eine Untersetzungsgetriebestufe mit der Getriebeeingangswelle 4 in Triebverbindung stehen, wobei eine koaxiale oder achsparallele Anordnung der Elektromaschine EM zu der Getriebeeingangswelle möglich ist.

Bei der vorliegend angenommenen unmittelbaren Verbindung des Rotors 3 der Elektromaschine EM mit der Getriebeeingangswelle 4 sind die Drehzahlen der Elektromaschine n_{EM} und der Getriebeeingangswelle n_{GE} somit identisch (n_{EM} = n_{GE}). Zwischen der Triebwelle 2 des Verbrennungsmotors VM und der Getriebeeingangswelle 4 ist eine als automatisierte Reibungskupplung ausgebildete Trennkupplung K angeordnet. Das Fahrgetriebe 5 ist bevorzugt als ein automatisiertes Stufenschaltgetriebe, d.h. als ein automatisiertes Schaltgetriebe oder als ein Planeten-Automatgetriebe, ausgebildet, es kann jedoch auch manuell schaltbar oder als ein stufenlos verstellbares Getriebe ausgebildet sein. Die Getriebeausgangswelle 6 steht über ein Achsdifferenzial 7 mit den Antriebsrädern 8a, 8b einer Antriebsachse des Kraftfahrzeugs in Triebverbindung. Bei einem Allradfahrzeug würde die Getriebeausgangswelle 6 entsprechend mit einem Verteilergetriebe in Triebverbindung sein.

Wird ein Kraftfahrzeug mit einem derartigen Hybridantriebsstrang 1 im reinen Elektrofahrbetrieb, d.h. mit abgeschalteten Verbrennungsmotor VM und geöffneter Trennkupplung K im Zugbetrieb gefahren, kann es aufgrund einer erhöhten Leistungsanforderung des Fahrers oder einer Geschwindigkeitsregelanlage erforderlich sein, den Verbrennungsmotor VM zu starten und antriebswirksam an die Getriebeeingangswelle 4 anzukoppeln. Hierzu muss der zuvor gestartete Verbrennungsmotor VM in etwa auf die Getriebeeingangsdrehzahl n_{GE} beschleunigt und die Trennkupplung K weitgehend geschlossen werden.

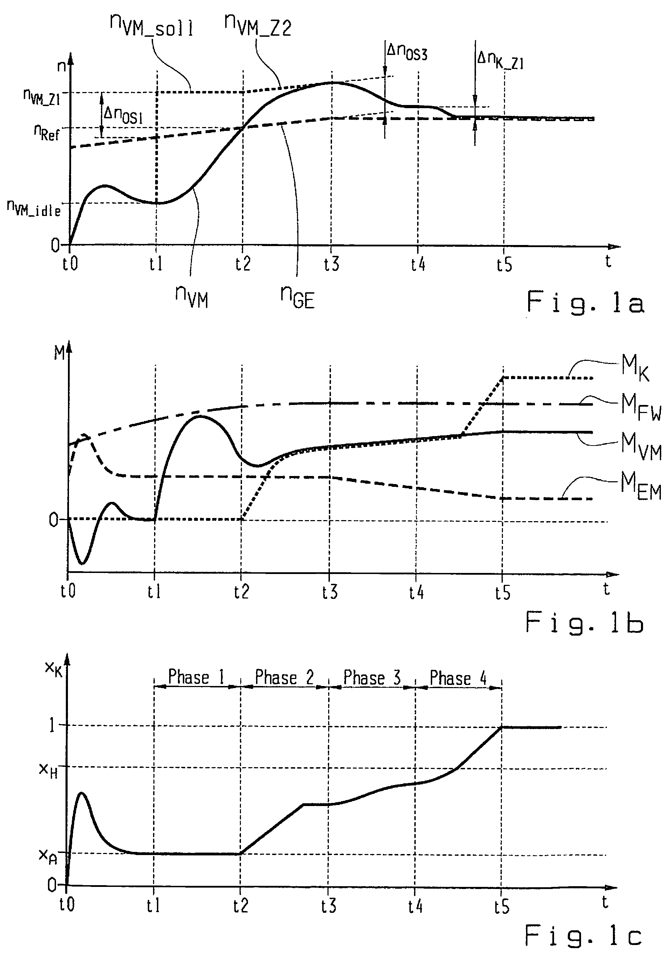

Nachfolgend wird anhand der in Fig. 1 a abgebildeten Drehzahlverläufe n_{VM}(t), n_{GE}(t) des Verbrennungsmotors VM und der Getriebeeingangswelle 4, der in Fig. 1 b abgebildeten Drehmomentverläufe M_{VM}(t) des Verbrennungsmotors VM, M_{K}(t) der Trennkupplung K, und M_{EM}(t) der Elektromaschine EM sowie des Fahrerwunschmomentes M_{FW}(t), und des in Fig. 1 c abgebildeten Schließgradverlaufes x_{K}(t) der Trennkupplung K erläutert, wie der Verbrennungsmotor VM nach seinem Start in einer ersten Verfahrensvariante an die Getriebeeingangswelle 4 angekoppelt wird.

Nach dem Auftreten einer erhöhten Leistungsanforderung wird zunächst der Verbrennungsmotor zwischen den Zeitpunkten t0 und t1 gestartet. Dies erfolgt vorliegend beispielhaft mit einem Schleppstart, bei dem die Trennkupplung K kurzzeitig innerhalb eines Schlupfbetriebs teilweise geschlossen und der Verbrennungsmotor VM bis zum Erreichen einer für den verbrennungsmotorischen Start ausreichenden Mindeststartdrehzahl angeschleppt wird. Da das hierzu erforderliche Schleppmoment durch eine simultane kurzzeitige Erhöhung des von der Elektromaschine EM abgegebenen Drehmomentes M_{EM} aufgebracht wird, wirkt sich der Startvorgang des Verbrennungsmotors VM vorteilhaft nicht auf die Getriebeeingangsdrehzahl n_{GE} aus. Nach dem verbrennungsmotorischen Start des Verbrennungsmotors VM läuft dieser zum Zeitpunkt t1 mit seiner Leerlaufdrehzahl n_{VM_idle}. Die Trennkupplung K ist nach dem Schleppstart des Verbrennungsmotors VM nicht vollständig (x_{K} = 0) sondern nur bis an den Anlegepunkt (x_{K} = x_{A}) geöffnet worden und kann daher nachfolgend verzögerungsfrei weiter geschlossen werden.

Die eigentliche Ankopplung des Verbrennungsmotors VM an die Getriebeeingangswelle 4 erfolgt zwischen den Zeitpunkten t1 und t5 und beginnt damit, dass der Verbrennungsmotor VM in einer ersten Phase (t = t1 bis t2) mit einer Drehzahlregelung in Richtung auf eine über der aktuellen Getriebeeingangsdrehzahl n_{GE} liegende Zieldrehzahl n_{VM_Z1} beschleunigt wird (n_{VM_Z1} > n_{GE}). Die Zieldrehzahl n_{VM_Z1} des Verbrennungsmotors VM ist um einen Drehzahloffset Δn_{OS1} von etwa 50 bis 200 Umdrehungen pro Minute über der Getriebeeingangsdrehzahl n_{GE} zu Beginn der ersten Phase (t = t1) festgelegt (n_{VM_Z1} = n_{GE}(t1) + Δn_{OS1}). Die Solldrehzahl n_{VM_soll} der Drehzahlregelung des Verbrennungsmotors VM wird zu Beginn der ersten Phase (t = t1) sprunghaft von der Leerlaufdrehzahl n_{VM_idle} auf die Zieldrehzahl n_{VM_Z1} erhöht, was einen relativ steilen Drehzahlanstieg *d*n_{VM}/*d*t des Verbrennungsmotors VM bewirkt. Mit dem Erreichen oder Überschreiten einer unterhalb der Zieldrehzahl n_{VM_Z1} liegenden Referenzdrehzahl n_{Ref}, die vorliegend gleich der aktuellen Getriebeeingangsdrehzahl n_{GE} definiert ist (n_{Ref} = n_{GE}(t2)), durch die Motordrehzahl n_{VM} (n_{VM} ≥ n_{Ref}), ist die erste Phase beendet (t = t2) und es beginnt eine zweite Phase (t = t2 bis t3).

In der zweiten Phase wird die Drehzahlregelung des Verbrennungsmotors VM fortgesetzt. Zugleich wird aber die Trennkupplung K zur Einstellung eines aus dem Fahrerwunschmoment M_{FW} ableitbaren Zielmomentes M_{VM_Ziel} des Verbrennungsmotors VM mit einem stetigen Anstieg des übertragbaren Drehmomentes M_{K} geschlossen. Hierbei wird der Verbrennungsmotor VM auf eine korrigierte Zieldrehzahl n_{VM_Z2} eingeregelt, mit der vorliegend der Drehzahlabstand Δn_{OS3} zu der Getriebeeingangsdrehzahl n_{GE} zum Zeitpunkt t2 konstant gehalten wird (n_{VM_Z2} = n_{GE} + Δn_{OS3}).

Die zweite Phase ist beendet (t = t3), wenn der Verbrennungsmotor VM seine Zieldrehzahl n_{VM_Z2} innerhalb einer vorgegebenen Differenzdrehzahltoleranz erreicht hat, und wenn der Differenzdrehzahlgradient dΔn_{K}/*d*t an der Trennkupplung K im Betrag einen festgelegten Mindestdifferenzdrehzahlgradienten (*d*Δn_{K}/*d*t)ₘᵢₙ erreicht oder unterschritten hat (|*d*Δnₖ/*d*t| ≤ (|*d*Δnₖ/*d*t|min > 0), oder die Differenz zwischen dem erzeugten Drehmoment M_{VM} des Verbrennungsmotors VM und dem übertragbaren Drehmoment M_{K} der Trennkupplung K im Betrag ein festgelegtes Mindestdifferenzmoment ΔMₘᵢₙ erreicht oder unterschritten hat (|M_{VM} - M_{K}| ≤ ΔMₘᵢₙ > 0).

In der anschließenden dritten Phase (t = t3 bis t4) wird der Verbrennungsmotor VM gesteuert auf das Zielmoment M_{VM_Ziel} eingestellt und gleichzeitig die Trennkupplung K mit einer Differenzdrehzahlregelung auf eine Zieldrehzahldifferenz Δn_{K_Z1} eingestellt. Dabei wird beispielhaft das Zielmoment M_{VM_Ziel} des Verbrennungsmotors VM stetig erhöht und das von der Elektromaschine EM abgegebene Drehmoment M_{EM} entsprechend reduziert. Die Zieldrehzahldifferenz Δn_{K_Z1} der Differenzdrehzahlregelung der Trennkupplung K ist kleiner festgelegt als die Drehzahldifferenz Δn_{K} zu Beginn der dritten Phase (t = t3) (Δn_{K_Z1} < Δn_{K}(t3)). Die dritte Phase ist beendet (t = t4), wenn die Drehzahldifferenz Δn_{K} an der Trennkupplung K die Zieldrehzahldifferenz Δn_{K_Z1} innerhalb einer vorgegebenen Differenzdrehzahltoleranz erreicht hat.

In der vierten Phase (t = t4 bis t5) wird die Trennkupplung K mit einem stetigen Verlauf vollständig geschlossen (x_{K} =1), da vorliegend beispielhaft keine Dauerschlupfregelung der Trennkupplung K vorgesehen ist.

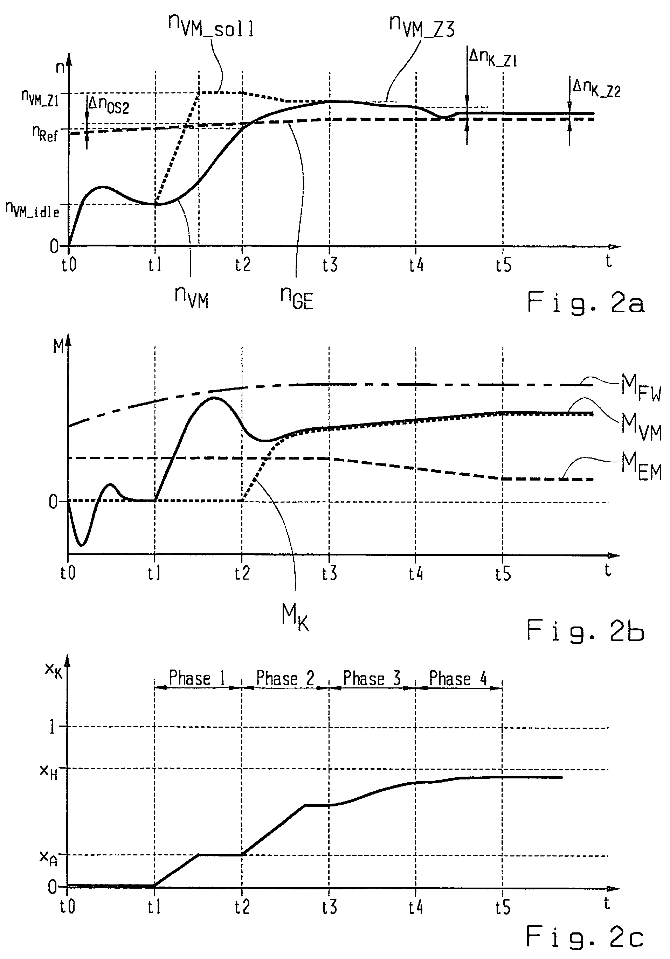

In den in Fig. 2a abgebildeten Drehzahlverläufen n_{VM}(t), n_{GE}(t) des Verbrennungsmotors VM und der Getriebeeingangswelle 4, den in Fig. 2b abgebildeten Drehmomentverläufen M_{VM}(t), M_{K}(t), M_{EM}(t) des Verbrennungsmotors VM, der Trennkupplung K und der Elektromaschine EM sowie des Fahrerwunschmomentes M_{FW}(t), und des in Fig. 2c abgebildeten Schließgradverlaufes x_{K}(t) der Trennkupplung K ist eine zweite Verfahrensvariante zur Ankoppelung des Verbrennungsmotors VM beschrieben, die sich jedoch nur in einigen Details von der ersten Verfahrensvariante nach den Figuren 1 a bis 1 c unterscheidet.

Der Verbrennungsmotor VM wird vorliegend, beispielsweise durch einen zugeordneten elektromotorischen Anlasser, gestartet, so dass die Trennkupplung K zum Zeitpunkt t1 vollständig geöffnet ist (x_{K}(t1) = 0). Um für den nachfolgenden Schließvorgang ein schnelles Ansprechverhalten zu erreichen, wird die Trennkupplung daher während der ersten Phase (t = t1 bis t2) bis zum Anlegepunkt (x_{K} = x_{A}) geschlossen. Zudem wird nunmehr die Solldrehzahl n_{VM_soll} der Drehzahlregelung des Verbrennungsmotors VM zu Beginn der ersten Phase (t = t1) rampenförmig und somit stetig von der Leerlaufdrehzahl n_{VM_idle} auf die Zieldrehzahl n_{VM_Z1} erhöht, was einen weniger steilen Drehzahlanstieg *d*n_{VM}/*d*t des Verbrennungsmotors VM zur Folge hat. Die erste Phase ist wiederum beendet (t = t2), wenn die Motordrehzahl n_{VM} die unterhalb der Zieldrehzahl n_{VM_Z1} liegende Referenzdrehzahl n_{Ref} erreicht oder überschritten hat (n_{VM} ≥ n_{Ref}). Vorliegend ist die Referenzdrehzahl n_{Ref} jedoch beispielhaft um einen Drehzahloffset Δn_{OS2} unter der aktuellen Getriebeeingangsdrehzahl n_{GE} liegend definiert (n_{Ref} = n_{GE}(t2) - Δn_{OS2}).

Ein weiterer Unterschied zu der ersten Verfahrensvariante nach den Figuren 1 a bis 1 c besteht darin, dass die korrigierte Zieldrehzahl n_{VM_Z3} der Drehzahlregelung des Verbrennungsmotors VM in der zweiten Phase (t = t2 bis t3) nunmehr auf einem niedrigeren, zwischen der Zieldrehzahl n_{VM_Z1} der ersten Phase und der aktuellen Getriebeeingangsdrehzahl n_{GE}(t2) liegenden Niveau gehalten wird (n_{GE}(t2) < n_{VM_Z3} < n_{VM_Z1}). Dabei wird die Solldrehzahl n_{VM_soll} der Drehzahlregelung des Verbrennungsmotors VM zu Beginn der zweiten Phase (t = t2) stetig, insbesondere rampenförmig, von der Zieldrehzahl der ersten Phase n_{VM_Z1} auf die korrigierte Zieldrehzahl n_{VM_Z3} abgesenkt. Durch die derart reduzierte Drehzahldifferenz Δn_{K} wird die thermische Belastung der Trennkupplung K reduziert und damit deren Gebrauchsdauer erhöht.

Die in der dritten Phase (t = t3 bis t4) an der Trennkupplung K eingeregelte Drehzahldifferenz Δn_{K_Z1} ergibt sich vorliegend entsprechend kleiner als dies in der ersten Verfahrensvariante nach den Figuren 1 a bis 1 c der Fall ist. In der vierten Phase (t = t4 bis t5) wird die Trennkupplung K nunmehr unter Weiterführung der Differenzdrehzahlregelung auf eine niedrigere, für einen Dauerschlupfbetrieb geeignete Zieldrehzahldifferenz Δn_{K_Z2} eingeregelt (Δn_{K_Z2} < Δn_{K_Z1}), da vorliegend zur Dämpfung der Drehschwingungen des Verbrennungsmotors VM eine Dauerschlupfregelung der Trennkupplung K vorgesehen ist. Bei dieser Betriebsweise ist die Trennkupplung K bis zu ihrem jeweiligen Haftpunkt x_{H} geschlossen

### Bezugszeichen

- 1: Hybridantriebsstrang
- 2: Triebwelle, Kurbelwelle
- 3: Rotor der Elektromaschine
- 4: Getriebeeingangswelle
- 5: Fahrgetriebe
- 6: Getriebeausgangswelle
- 7: Achsdifferenzial
- 8a, 8b: Antriebsräder
- EM: Elektromaschine
- K: Trennkupplung, Reibungskupplung
- M: Drehmoment
- M_{EM}: Drehmoment der Elektromaschine
- M_{FW}: Fahrerwunschmoment
- M_{K}: Übertragbares Drehmoment der Trennkupplung
- M_{K_soll}: Sollmoment der Trennkupplung
- M_{VM}: Drehmoment des Verbrennungsmotors
- M_{VM_ziel}: Zielmoment des Verbrennungsmotors
- n: Drehzahl
- n_{EM}: Drehzahl der Elektromaschine
- n_{GE}: Getriebeeingangsdrehzahl
- n_{Ref}: Referenzdrehzahl
- n_{VM}: Drehzahl des Verbrennungsmotors
- n_{VM_idle}: Leerlaufdrehzahl des Verbrennungsmotors
- n_{VM_soll}: Solldrehzahl des Verbrennungsmotors
- n_{VM_Z1}: Zieldrehzahl des Verbrennungsmotors
- n_{VM_Z2}: Korrigierte Zieldrehzahl des Verbrennungsmotors
- n_{VM_Z3}: Korrigierte Zieldrehzahl des Verbrennungsmotors
- t: Zeit
- t0 - t5: Zeitpunkte
- VM: Verbrennungsmotor
- x_{A}: Anlegepunkt der Trennkupplung
- x_{H}: Haftpunkt der Trennkupplung
- x_{K}: Schließgrad der Trennkupplung
- ΔM: Momentendifferenz, Differenzmoment
- ΔMₘᵢₙ: Mindestdifferenzmoment
- ΔM_{OS}: Offsetmoment
- Δn: Drehzahldifferenz
- Δn_{K}: Drehzahldifferenz an der Trennkupplung
- Δn_{K_min}: Mindestdrehzahldifferenz an der Trennkupplung
- Δn_{K_Z1}: Erste Zieldrehzahldifferenz an der Trennkupplung
- Δn_{K_Z2}: Zweite Zieldrehzahldifferenz an der Trennkupplung
- Δn_{OS1}: Drehzahloffset
- Δn_{OS2}: Drehzahloffset
- Δn_{OS3}: Drehzahlabstand
- Δn_{T1}: Differenzdrehzahltoleranz
- Δn_{T2}: Differenzdrehzahltoleranz
- *d*n_{VM}/*d*t: Drehzahlgradient des Verbrennungsmotors
- *d*x_{K}*ld*t: Schließgeschwindigkeit der Trennkupplung
- *d*Δn_{K}*ld*t: Differenzdrehzahlgradient an der Trennkupplung
- (*d*Δn_{K}/*d*t)ₘₐₓ: maximaler Differenzdrehzahlgradient an der Trennkupplung
- (*d*Δn_{K}/*d*t)ₘᵢₙ: Mindestdifferenzdrehzahlgradient an der Trennkupplung

## Patentansprüche

1. Verfahren zur Steuerung eines Hybridantriebsstrangs eines Kraftfahrzeugs, der einen Verbrennungsmotor (VM) mit einer Triebwelle (2), ein in seiner Übersetzung verstellbares Fahrgetriebe (5) mit einer Getriebeeingangswelle (4) und einer mit einem Achs- oder Verteilergetriebe (7) in Triebverbindung stehenden Getriebeausgangswelle (6), eine zumindest als Motor betreibbare Elektromaschine (EM) mit einem mit der Getriebeeingangswelle (4) in Triebverbindung stehenden Rotor (3), und eine zwischen der Triebwelle (2) des Verbrennungsmotors (VM) und der Getriebeeingangswelle (4) angeordnete, als automatisierte Reibungskupplung ausgebildete Trennkupplung (K) aufweist, wobei ausgehend von einem Elektrofahrbetrieb mit geöffneter Trennkupplung (x_{K} = 0; x_{K} = x_{A}) beim Auftreten einer erhöhten Leistungsanforderung der zuvor gestartete Verbrennungsmotor (VM) durch eine Beschleunigung auf die Getriebeeingangsdrehzahl (n_{GE}) und durch das Schließen der Trennkupplung (x_{K} = 1; x_{A} < x_{K} < x_{H}) an die Getriebeeingangswelle (4) angekoppelt wird, **dadurch gekennzeichnet, dass** in einer ersten Phase (t = t1 bis t2) der Verbrennungsmotor (VM) mit einer Drehzahlregelung in Richtung auf eine über der aktuellen Getriebeeingangsdrehzahl (n_{GE}) liegende Zieldrehzahl (n_{VM_Z1}) beschleunigt wird (n_{VM_Z1} > n_{GE}), bis eine unter der Zieldrehzahl (n_{VM_Z1}) liegende Referenzdrehzahl (n_{Ref}) erreicht oder überschritten ist (n_{VM} ≥ n_{Ref}, n_{Ref} < n_{VM_Z1}), während die Trennkupplung (K) weitgehend geöffnet bleibt, dass in einer zweiten Phase (t = t2 bis t3) der Verbrennungsmotor (VM) unter Fortführung der Drehzahlregelung auf eine über der aktuellen Getriebeeingangsdrehzahl (n_{GE}) liegende korrigierte Zieldrehzahl (n_{VM_Z2}, n_{VM_Z3}) eingestellt wird (n_{VM_Z2} > n_{GE}, n_{VM_Z3} > n_{GE}), während die Trennkupplung (K) bis zur Einstellung eines Zielmomentes (M_{VM_Ziel}) des Verbrennungsmotors (VM) geschlossen wird (M_{K} = M_{VM_Ziel}), dass in einer dritten Phase (t = t3 bis t4) der Verbrennungsmotor (VM) mit einer Drehmomentsteuerung auf das Zielmoment (M_{VM_Ziel}) eingestellt wird, während die Trennkupplung (K) mit einer Differenzdrehzahlregelung auf eine Zieldrehzahldifferenz (Δn_{K_Z1}) eingeregelt wird (Δn_{K} = Δn_{K_Z1}), und dass in einer vierten Phase (t = t4 bis t5) unter Fortführung der Drehmomentsteuerung des Verbrennungsmotors (VM) die Trennkupplung (K) auf einen für den Dauerbetrieb vorgesehenen Schließzustand eingestellt oder eingeregelt wird (x_{K} = 1; Δn_{K} = Δn_{K_Z2}).

2. Verfahren nach Anspruch 1, **dadurch gekennzeichnet, dass** die Trennkupplung (K) während der ersten Phase (t = t1 bis t2) am Anlegepunkt (x_{K} = x_{A}) gehalten wird, sofern sie zu Beginn der ersten Phase (t = t1) schon bis zum Anlegepunkt geschlossen ist (x_{K}(t1) = x_{K}(t2) = x_{A}), und bis zum Anlegepunkt (x_{K} = x_{A}) geschlossen wird, sofern sie zu Beginn der ersten Phase (t = t1) vollständig geöffnet ist (x_{K}(t1) = 0, x_{K}(t2) = x_{A}).

3. Verfahren nach einem der Ansprüche 1 bis 2, **dadurch gekennzeichnet, dass** die Zieldrehzahl (n_{VM_Z1}) des Verbrennungsmotors (VM) um einen Drehzahloffset (Δn_{OS1}) von etwa 50 bis 200 Umdrehungen pro Minute über der Getriebeeingangsdrehzahl (n_{GE}) zu Beginn der ersten Phase (t = t1) festgelegt ist (n_{VM_Z1} = n_{GE}(t1) + Δn_{OS1}).

4. Verfahren nach einem der Ansprüche 1 bis 3, **dadurch gekennzeichnet, dass** die Solldrehzahl (n_{VM_soll}) der Drehzahlregelung des Verbrennungsmotors (VM) zu Beginn der ersten Phase (t = t1) sprunghaft oder stetig von der aktuellen Motordrehzahl (n_{VM}(t1) = n_{VM_idle}) auf die Zieldrehzahl (n_{VM_Z1}) erhöht wird.

5. Verfahren nach einem der Ansprüche 1 bis 4, **dadurch gekennzeichnet, dass** die Referenzdrehzahl (n_{Ref}) zur Beendigung der ersten Phase (t = t2) der aktuellen Getriebeeingangsdrehzahl (n_{GE}(t2)) entspricht oder um einen festgelegten Drehzahloffset (Δn_{OS2}) über oder unter der aktuellen Getriebeeingangsdrehzahl (n_{GE}(t2)) liegt (n_{Ref} = n_{GE}(t2); n_{Ref} = n_{GE}(t2) +/- Δn_{OS2}).

6. Verfahren nach einem der Ansprüche 1 bis 5, **dadurch gekennzeichnet, dass** die korrigierte Zieldrehzahl (n_{VM_Z2}) der Drehzahlregelung des Verbrennungsmotors (VM) ab dem Beginn der zweiten Phase (t = t2) in einem konstanten Drehzahlabstand (Δn_{OS3}) zu der Getriebeeingangsdrehzahl (n_{GE}) gehalten wird (n_{VM_Z2} = n_{GE} + Δn_{OS3}).

7. Verfahren nach wenigstens einem der Ansprüche 1 bis 5, **dadurch gekennzeichnet, dass** die korrigierte Zieldrehzahl (n_{VM_Z3}) der Drehzahlregelung des Verbrennungsmotors (VM) in der zweiten Phase (t = t2 bis t3) auf einem niedrigeren, zwischen der Zieldrehzahl (n_{VM_Z1}) der ersten Phase und der aktuellen Getriebeeingangsdrehzahl (n_{GE}(t2)) liegenden Niveau gehalten wird (n_{GE}(t2) < n_{VM_Z3} < n_{VM_Z1}).

8. Verfahren nach Anspruch 7, **dadurch gekennzeichnet, dass** die Solldrehzahl (n_{VM_soll}) der Drehzahlregelung des Verbrennungsmotors (VM) zu Beginn der zweiten Phase (t = t2) stetig von der Zieldrehzahl der ersten Phase (n_{VM_Z1}) auf die korrigierte Zieldrehzahl (n_{VM_Z3}) abgesenkt wird.

9. Verfahren nach einem der Ansprüche 1 bis 8, **dadurch gekennzeichnet, dass** das Zielmoment (M_{VM_Ziel}) des Verbrennungsmotors (VM) aus einem auf die Getriebeeingangswelle (4) bezogenen Fahrerwunschmoment (M_{FW}) durch die Subtraktion des aktuellen Drehmomentes (M_{EM}) der Elektromaschine (M_{VM_Ziel} = M_{FW} - M_{EM}) oder durch die Subtraktion des aktuellen Drehmomentes (M_{EM}) der Elektromaschine (EM) und eines festgelegten Offsetmomentes (ΔM_{OS}) bestimmt wird (M_{VM_Ziel} = M_{FW} - M_{EM} -ΔM_{OS}).

10. Verfahren nach einem der Ansprüche 1 bis 9, **dadurch gekennzeichnet, dass** das durch das Schließen der Trennkupplung (x_{K} > x_{A}) einzustellende Sollmoment (M_{K_soll}) der Trennkupplung (K) zu Beginn der zweiten Phase (t = t2) stetig auf das Zielmoment (M_{VM_ziel}) des Verbrennungsmotors (VM) erhöht wird.

11. Verfahren nach einem der Ansprüche 1 bis 10, **dadurch gekennzeichnet, dass** die Schließgeschwindigkeit (*d*x_{K}/*d*t) der Trennkupplung (K) durch die Einhaltung einer Mindestdrehzahldifferenz (Δn_{K_min}) und/oder durch die Einhaltung eines maximalen Differenzdrehzahlgradienten ((*d*Δn_{K}/*d*t)ₘₐₓ) begrenzt wird (Δn_{K} ≥ Δn_{K_min}; |*d*Δn_{K}/dt| ≤ (*d*Δn_{K}/*d*t)ₘₐₓ > 0).

12. Verfahren nach einem der Ansprüche 1 bis 11, **dadurch gekennzeichnet, dass** das durch den aktuellen Schließgrad der Trennkupplung (x_{K} > x_{A}) bestimmte übertragbare Drehmoment (M_{K}) der Trennkupplung (K) in der zweiten Phase (t = t2 bis t3) als Vorsteuermoment oder als Teil eines Vorsteuermomentes der Drehzahlregelung des Verbrennungsmotors (VM) verwendet wird.

13. Verfahren nach einem der Ansprüche 1 bis 12, **dadurch gekennzeichnet, dass** die zweite Phase beendet ist (t = t3), wenn der Verbrennungsmotor (VM) seine Zieldrehzahl (n_{VM_Z2}; n_{VM_Z3}) innerhalb einer vorgegebenen Differenzdrehzahltoleranz (Δn_{T1}) erreicht hat (n_{VM}(t3) = n_{VM_Z2} +/- Δn_{T1}; n_{VM}(t3) = n_{VM_Z3} +/- Δn_{T1}), und wenn der Differenzdrehzahlgradient (*d*Δn_{K}/*d*t) an der Trennkupplung im Betrag einen festgelegten Mindestdifferenzdrehzahlgradienten ((*d*Δn_{K}/*d*t)ₘᵢₙ) erreicht oder unterschritten hat (|*d*Δn_{K}/*d*t| ≤ (*d*Δn_{K}/*d*t)ₘᵢₙ > 0), oder die Differenz zwischen dem erzeugten Drehmoment (M_{VM}) des Verbrennungsmotors (VM) und dem übertragbaren Drehmoment (M_{K}) der Trennkupplung (K) im Betrag ein festgelegtes Mindestdifferenzmoment (ΔMₘᵢₙ) erreicht oder unterschritten hat (|M_{VM} - M_{K}| ≤ ΔMₘᵢₙ > 0).

14. Verfahren nach einem der Ansprüche 1 bis 13, **dadurch gekennzeichnet, dass** die Zieldrehzahldifferenz (Δn_{K_Z1}) der Differenzdrehzahlregelung der Trennkupplung (K) kleiner als die Drehzahldifferenz (Δn_{K}) zu Beginn der dritten Phase (t = t3) festgelegt ist (Δn_{K_Z1} < Δn_{K}(t3)).

15. Verfahren nach Anspruch 14, **dadurch gekennzeichnet, dass** die Solldrehzahldifferenz (Δn_{K_soll}) der Differenzdrehzahlregelung der Trennkupplung (K) zu Beginn der dritten Phase (t = t3) stetig von der aktuellen Drehzahldifferenz (Δn_{K}(t3)) auf die Zieldrehzahldifferenz (Δn_{K_Z1}) abgesenkt wird.

16. Verfahren nach einem der Ansprüche 1 bis 15, **dadurch gekennzeichnet, dass** das aktuelle Drehmoment (M_{VM}) des Verbrennungsmotors (VM) in der dritten Phase (t = t3 bis t4) als Vorsteuermoment oder als Teil eines Vorsteuermomentes der Differenzdrehzahlregelung des Trennkupplung (K) verwendet wird.

17. Verfahren nach einem der Ansprüche 1 bis 16, **dadurch gekennzeichnet, dass** die dritte Phase beendet ist (t = t4), wenn die Drehzahldifferenz (Δn_{K}) an der Trennkupplung (K) die Zieldrehzahldifferenz (Δn_{K_Z1}) innerhalb einer vorgegebenen Differenzdrehzahltoleranz (Δn_{T2}) erreicht hat (Δn_{K}(t4) = Δn_{K_Z1} +/- Δn_{T2}).

18. Verfahren nach einem der Ansprüche 1 bis 17, **dadurch gekennzeichnet, dass** die Trennkupplung (K) in der vierten Phase (t = t4 bis t5) vollständig geschlossen wird (x_{K} =1), wenn keine Dauerschlupfregelung der Trennkupplung (K) vorgesehen ist, und unter Weiterführung der Differenzdrehzahlregelung auf eine niedrigere, für einen Dauerschlupfbetrieb geeignete Zieldrehzahldifferenz (Δn_{K_Z2}) eingeregelt wird (Δn_{K_Z2} < Δn_{K_Z1}), sofern eine Dauerschlupfregelung der Trennkupplung (K) vorgesehen ist.

## Claims

1. Method for controlling a hybrid drive train of a motor vehicle, which hybrid drive train has an internal combustion engine (VM) with a driveshaft (2), a transmission (5) whose transmission ratio can be adjusted and which has a transmission input shaft (4) and a transmission output shaft (6) which has a drive connection to an axle gear or distributor gear (7), an electric machine (EM) which can be operated at least as a motor and which has a rotor (3) which has a drive connection to the transmission input shaft (4), and a clutch (K) which is arranged between the driveshaft (2) of the internal combustion engine (VM) and the transmission input shaft (4) and is embodied as an automated friction clutch, wherein, when an increased power demand occurs originating from an electric driving mode with the clutch opened (x_{K} = 0; x_{K} = x_{A}), the previously started internal combustion engine (VM) is coupled to the transmission input shaft (4) by acceleration to the transmission input rotational speed (n_{GE}) and by closing the clutch (x_{K} = 1; x_{A} < x_{K} < x_{H}), **characterized in that** in a first phase (t = t1 to t2) the internal combustion engine (VM) is accelerated with closed-loop rotational speed control in the direction of a target rotational speed (n_{VM_Z1}) which is above the current transmission input rotational speed (n_{GE}), (n_{VM_Z1} > n_{G}), until a reference rotational speed (n_{Ref}) which is below the target rotational speed (n_{VM_Z1}) is reached or exceeded (n_{VM} ≥ n_{Ref}, n_{Ref} < n_{VM_Z1}) while the clutch (K) remains largely open, **in that** in a second phase (t = t2 to t3) the internal combustion engine (VM) is set, with continuation of the closed-loop rotational speed control, to a corrected target rotational speed (n_{VM_Z2}, n_{VM_Z3}) which is above the current transmission input rotational speed (n_{GE}), (n_{VM_Z2} > n_{GE}, n_{VM_Z3} > n_{GE}) while the clutch (K) is closed until a target torque (M_{VM_Ziel}) of the internal combustion engine (VM) is set, (M_{K} = M_{VM_Ziel}), **in that** in a third phase (t = t3 to t4) the internal combustion engine (VM) is set with open-loop torque control to the target torque (M_{VM_Ziel}) while the clutch (K) is adjusted with a differential rotational-speed open-loop control to a target rotational speed difference (Δn_{K_Z1} (Δn_{K} = Δn_{K_Z1}), and **in that** in a fourth phase (t = t4 to t5), with continuation of the open-loop torque control of the internal combustion engine (VM), the clutch (K) is set or adjusted to a closed state which is provided for continuous operation (x_{K} = 1; Δn_{K} = Δn_{K_Z2}).

2. Method according to Claim 1, **characterized in that** during the first phase (t = t1 to t2) the clutch (K) is held at the bite point (x_{K} = x_{A}) if it is already closed up to the bite point at the start of the first phase (t = t1), (x_{K}(t1) = x_{K}(t2) = x_{A}), and is closed up to the bite point (x_{K} = x_{A}) if it is completely opened at the start of the first phase (t = t1), (x_{K}(t1) = 0, x_{K}(t2) = x_{A}).

3. Method according to one of Claims 1 to 2, **characterized in that** the target rotational speed (n_{VM_Z1}) of the internal combustion engine (VM) is specified above the transmission input rotational speed (n_{GE}) by a rotational speed offset (Δn_{OS1}) of approximately 50 to 200 revolutions per minute at the start of the first phase (t = t1), (n_{VM_Z1} = n_{GE} (t1) + Δn_{OS1}).

4. Method according to one of Claims 1 to 3, **characterized in that** the setpoint rotational speed (n_{VM_soll}) of the closed-loop rotational speed control of the internal combustion engine (VM) is increased abruptly or continuously from the current engine rotational speed (n_{VM}(t1) = n_{VM_idle}) to the target rotational speed (n_{VM_Z1}) at the start of the first phase (t = t1).

5. Method according to one of Claims 1 to 4, **characterized in that** at the end of the first phase (t = t2) the reference rotational speed (n_{Ref}) corresponds to the current transmission input rotational speed (n_{GE}(t2)) or is above or below the current transmission input rotational speed (n_{GE}(t2)) by a defined rotational speed offset (Δn_{OS2}), (n_{Ref} = n_{GE}(t2); n_{Ref} = n_{GE}(t2) +/Δn_{OS2}).

6. Method according to one of Claims 1 to 5, **characterized in that** the corrected target rotational speed (n_{VM_Z2}) of the closed-loop rotational speed control of the internal combustion engine (VM) is held at a constant rotational speed interval (Δn_{OS3}) from the transmission input rotational speed (n_{GE}) from the start of the second phase (t = t2), (n_{VM_Z2} = n_{GE} + Δn_{OS3}).

7. Method according to at least one of Claims 1 to 5, **characterized in that** in the second phase (t = t2 to t3) the corrected target rotational speed (n_{VM_Z3}) of the closed-loop rotational speed control of the internal combustion engine (VM) is held at a relatively low level between the target rotational speed (n_{VM_Z1}) of the first phase and the current transmission input rotational speed (n_{GE} (t2)), (n_{GE} (t2) < n_{VM_Z3} < n_{VM_Z1}).

8. Method according to Claim 7, **characterized in that** at the start of the second phase (t = t2) the setpoint rotational speed (n_{VM_soll}) of the closed-loop rotational speed control of the internal combustion engine (VM) is reduced continuously from the target rotational speed of the first phase (n_{VM_Z1}) to the corrected target rotational speed (n_{VM_Z3}).

9. Method according to one of Claims 1 to 8, **characterized in that** the target torque (M_{VM_Ziel}) of the internal combustion engine (VM) is determined from a driver's desired torque (M_{FW}), referred to the transmission input shaft (4), by subtraction of the current torque (M_{EM}) of the electric machine (M_{VM_Ziel} = M_{FW} - M_{EM}) or by subtraction of the current torque (M_{EM}) of the electric machine (EM) and a specified offset torque (ΔM_{OS}), (M_{VM_ziel} = M_{FW} - M_{EM} - ΔM_{OS}).

10. Method according to one of Claims 1 to 9, **characterized in that** at the start of the second phase (t = t2) the setpoint torque (M_{K_soll}) of the clutch (K), which is to be set by closing the clutch (x_{K} > x_{A}) is increased continuously to the target torque (M_{VM_Ziel}) of the internal combustion engine (VM).

11. Method according to one of Claims 1 to 10, **characterized in that** the closing speed (*d*x_{K}/*d*t) of the clutch (K) is limited by compliance with a minimum rotational speed difference (Δn_{K_min}) and/or by compliance with a maximum differential rotational speed gradient ((*d*Δn_{K}/*d*t)ₘₐₓ), (Δn_{K} ≥ (Δn_{K_min}; |*d*Δn_{K}/*d*t| < (*d*Δn_{K}/d*t*)ₘₐₓ > 0).

12. Method according to one of Claims 1 to 11, **characterized in that** in the second phase (t = t2 to t3) the transmissible torque (M_{K}) of the clutch (K), which is determined by the current degree of closing of the clutch (x_{R} > x_{A}), is used as a pilot control torque or as part of a pilot control torque of the closed-loop rotational speed control of the internal combustion engine (VM).

13. Method according to one of Claims 1 to 12, **characterized in that** the second phase is ended (t = t3) if the internal combustion engine (VM) has reached its target rotational speed (n_{VM_Z2}; n_{VM_Z3}) within a predefined differential rotational speed tolerance (Δn_{T1}), (n_{VM}(t3) = n_{VM_Z2} +/- Δn_{T1}; n_{VM}(t3) = n_{VM_Z3} +/- Δn_{T1}) and if the differential rotational speed gradient (*d*Δn_{K}/*d*t) at the clutch has reached or fallen below in absolute terms a defined minimum differential rotational speed gradient ((*d*Δn_{K}/*d*t)ₘᵢₙ), (|*d*Δn_{K}/*d*t| ≤ (dΔn_{K}/*d*t)ₘᵢₙ > 0) or if the difference between the torque (M_{VM}) which is produced by the internal combustion engine (VM) and the transmissible torque (M_{K}) of the clutch (K) has reached or fallen below in absolute terms a specified minimum differential torque (ΔMₘᵢₙ), (|M_{VM}-M_{K} I ≤ ΔMₘᵢₙ > 0).

14. Method according to one of Claims 1 to 13, **characterized in that** the target rotational speed difference (Δn_{K_Z1}) of the differential rotational-speed closed-loop control of the clutch (K) is specified as being lower than the rotational speed difference (Δn_{K}) at the start of the third phase (t = t3), (Δn_{K_Z1} < Δn_{K}(t3)).

15. Method according to Claim 14, **characterized in that** at the start of the third phase (t = t3) the setpoint rotational speed difference (Δn_{K_soll}) of the differential rotational-speed closed-loop control of the clutch (K) is reduced continuously from the current rotational speed difference (Δn_{K}(t3)) to the target rotational speed difference (Δn_{K_Z1}).

16. Method according to one of Claims 1 to 15, **characterized in that** in the third phase (t = t3 to t4) the current torque (M_{VM}) of the internal combustion engine (VM) is used as a pilot control torque or as part of a pilot control torque of the differential rotational-speed closed-loop control of the clutch (K).

17. Method according to one of Claims 1 to 16, **characterized in that** the third phase is ended (t = t4) if the rotational speed difference (Δn_{K}) at the clutch (K) has reached the target rotational speed difference (Δn_{K_Z1}) within a predefined differential rotational speed tolerance (Δn_{T2}), (Δn_{K}(t4) = Δn_{K_Z1} +/- Δn_{T2}).

18. Method according to one of Claims 1 to 17, **characterized in that** in the fourth phase (t = t4 to t5) the clutch (K) is completely closed (x_{K} = 1) if no closed-loop continuous slip control of the clutch (K) is provided, and is adjusted, with continuation of the differential rotational-speed closed-loop control, to a relatively low target rotational speed difference (Δn_{K_z2}), suitable for continuous slip operation, (Δn_{K_Z2} < Δn_{K_Z1}) if closed-loop continuous slip control of the clutch (K) is provided.

## Revendications

1. Procédé de commande d'une chaîne cinématique hybride d'un véhicule automobile, qui présente un moteur à combustion interne (VM) avec un arbre de commande (2), une boîte de vitesses à démultiplication réglable (5) avec un arbre d'entrée de boîte de vitesses (4) et un arbre de sortie de boîte de vitesses (6) qui est en liaison motrice avec un engrenage d'essieu ou de distributeur (7), une machine électrique (EM) utilisable au moins comme moteur avec un rotor (3) en liaison motrice avec l'arbre d'entrée de boîte de vitesses (4), et un embrayage de séparation (K) disposé entre l'arbre de commande (2) du moteur à combustion interne (VM) et l'arbre d'entrée de boîte de vitesses (4), réalisé sous forme d'embrayage à friction automatique, dans lequel en partant d'une marche électrique avec l'embrayage de séparation ouvert (x_{K} = 0; x_{K} = x_{A}), lors de l'apparition d'une demande de puissance accrue le moteur à combustion interne (VM) démarré au préalable est couplé à l'arbre d'entrée de boîte de vitesses (4) par une accélération à la vitesse de rotation d'entrée de boîte de vitesses (n_{GE}) et par la fermeture de l'embrayage de séparation (x_{K} = 1; x_{A} < x_{K} < x_{H}), **caractérisé en ce que** dans une première phase (t = t1 à t2), le moteur à combustion interne (VM) est accéléré avec une régulation de la vitesse de rotation en direction d'une vitesse de rotation cible (n_{VM_Z1}) supérieure à la vitesse de rotation actuelle d'entrée de boîte de vitesses (n_{GE}) (n_{VM_Z1} > n_{GE}), jusqu'à ce qu'une vitesse de rotation de référence (n_{Ref}) inférieure à la vitesse de rotation cible (n_{VM_Z1}) soit atteinte ou dépassée (nᵥₘ ≥ n_{Ref}, n_{Ref} < n_{VM_z1}), tandis que l'embrayage de séparation (K) reste largement ouvert, **en ce que** dans une deuxième phase (t = t2 à t3), le moteur à combustion interne (VM) est réglé (n_{vm_Z2} > n_{GE}, n_{VM_Z3} > n_{GE}) à une vitesse de rotation cible corrigée (R_{VM_Z2}, n_{VM_Z3}) supérieure à la vitesse de rotation actuelle d'entrée de boîte de vitesses (n_{GE}) avec poursuite de la régulation de la vitesse de rotation, tandis que l'embrayage de séparation (K) est fermé jusqu'au réglage d'un couple cible (M_{VM_Cible}) du moteur à combustion interne (VM) (M_{K} = M_{VM_Cible}), **en ce que** dans une troisième phase (t = t3 à t4), le moteur à combustion interne (VM) est réglé au couple cible (M_{VM_Cible}) avec une commande de couple de rotation, tandis que l'embrayage de séparation (K) est réglé à une différence de vitesse de rotation cible (Δn_{K_Z1}) avec une régulation de la vitesse de rotation différentielle (Δn_{K} = Δn_{K_Z1}), et **en ce que** dans une quatrième phase (t = t4 à t5), avec poursuite de la commande de couple de rotation du moteur à combustion interne (VM), l'embrayage de séparation (K) est réglé ou régulé à un état de fermeture prévu pour le fonctionnement permanent (x_{K} = 1; Δn_{K} = Δn_{K_Z2}).

2. Procédé selon la revendication 1, **caractérisé en ce que** l'embrayage de séparation (K) est maintenu pendant la première phase (t = t1 à t2) au point d'application (x_{K} = x_{A}), dans la mesure où, au début de la première phase (t = t1), il est déjà fermé jusqu'au point d'application (x_{K}(t1) = x_{K}(t2) = x_{A}), et il est fermé jusqu'au point d'application (x_{K} = x_{A}) dans la mesure où, au début de la première phase (t = t1), il est entièrement ouvert (x_{R}(t1) = 0, x_{K}(t2) = x_{A}).

3. Procédé selon l'une des revendications 1 à 2, **caractérisé en ce que** la vitesse de rotation cible (n_{VM_Z1}) du moteur à combustion interne (VM) est fixée au début de la première phase (t = t1) avec un décalage de vitesse de rotation (Δn_{OS1}) d'environ 50 à 200 tours par minute au-dessus de la vitesse de rotation d'entrée de boîte de vitesses (n_{GE}) (n_{VM_Z1} = n_{GE}(t1) + Δn_{OS1}).

4. Procédé selon l'une quelconque des revendications 1 à 3, **caractérisé en ce que** la vitesse de rotation de consigne (n_{VM_cons}) de la régulation de la vitesse de rotation du moteur à combustion interne (VM) est accrue, au début de la première phase (t = t1), par un saut ou en continu de la vitesse de rotation actuelle du moteur (n_{VM}(t1) = n_{VM_ralenti}) à la vitesse de rotation cible (n_{VM_Z1}).

5. Procédé selon l'une quelconque des revendications 1 à 4, **caractérisé en ce que** la vitesse de rotation de référence (n_{Ref}) à la fin de la première phase (t = t2) correspond à la vitesse de rotation actuelle d'entrée de boîte de vitesses (n_{GE}(t2)) ou se situe avec un décalage de vitesse de rotation fixé (Δn_{OS2}) au-dessus ou en dessous de la vitesse de rotation actuelle d'entrée de boîte de vitesse (n_{GE}(t2)) (n_{Ref} = n_{GE}(t2); n_{Ref} = n_{GE}(t2) ± Δn_{OS2}).

6. Procédé selon l'une quelconque des revendications 1 à 5, **caractérisé en ce que** la vitesse de rotation cible corrigée (n_{VM_Z2}) de la régulation de la vitesse de rotation du moteur à combustion interne (VM) est maintenue, à partir du début de la deuxième phase (t = t2), à une distance de vitesse de rotation constante (Δn_{OS3}) de la vitesse de rotation d'entrée de boîte de vitesses (n_{GE}) (n_{VM_Z2} = n_{GE} + Δn_{OS3}).

7. Procédé selon au moins une des revendications 1 à 5, **caractérisé en ce que** la vitesse de rotation cible corrigée (n_{VM_Z3}) de la régulation de la vitesse de rotation du moteur à combustion interne (VM) est maintenue dans la deuxième phase (t = t2 à t3) à un niveau plus bas, situé entre la vitesse de rotation cible (n_{VM_Z1}) de la première phase et la vitesse de rotation actuelle d'entrée de boîte de vitesses (n_{GE}(t2)) (n_{GE}(t2) < n_{VM_Z3} < n_{VM_Z1}).

8. Procédé selon la revendication 7, **caractérisé en ce que** la vitesse de rotation de consigne (n_{VM_cons}) de la régulation de la vitesse de rotation du moteur à combustion interne (VM) est abaissée, au début de la deuxième phase (t = t2), en continu de la vitesse de rotation cible de la première phase (n_{VM_Z1}) à la vitesse de rotation cible corrigée (n_{VM_Z3}).

9. Procédé selon l'une quelconque des revendications 1 à 8, **caractérisé en ce que** le couple cible (M_{VM_Cible}) du moteur à combustion interne (VM) est déterminé à partir d'un couple désiré par le conducteur (M_{FW}) rapporté à l'arbre d'entrée de boîte de vitesses (4) par la soustraction du couple de rotation actuel (M_{EM}) de la machine électrique (M_{VM_cible} = M_{FW} - M_{EM}) ou par la soustraction du couple de rotation actuel (M_{EM}) de la machine électrique (EM) et d'un couple de décalage fixé (ΔM_{OS}) (M_{VM_Cible} = M_{FW} - M_{EM} - ΔM_{OS}).

10. Procédé selon l'une quelconque des revendications 1 à 9, **caractérisé en ce que** le couple de consigne (M_{K_cons}) de l'embrayage de séparation (K) à régler par la fermeture de l'embrayage de séparation (x_{K} > x_{A}) est accru, au début de la deuxième phase (t = t2), en continu au couple cible (M_{VM_Cible}) du moteur à combustion interne (VM).

11. Procédé selon l'une quelconque des revendications 1 à 10, **caractérisé en ce que** la vitesse de fermeture (*d*X_{K}/*d*t) de l'embrayage de séparation (K) est limitée par le respect d'une différence de vitesse de rotation minimale (Δn_{K_min}) et/ou par le respect d'un gradient de vitesse de rotation différentielle maximal ((*d*Δn_{K}/*d*t)ₘₐₓ) (Δn_{K} ≥ Δn_{K_min}; |*d*Δn_{K}/*d*t| ≤ (*d*Δn_{K}/*d*t)ₘₐₓ > 0).

12. Procédé selon l'une quelconque des revendications 1 à 11, **caractérisé en ce que** le couple de rotation transmissible (M_{K}) de l'embrayage de séparation (K) déterminé par le degré de fermeture actuel de l'embrayage de séparation (x_{K} > x_{A}) est utilisé dans la deuxième phase (t = t2 à t3) comme couple de commande primaire ou comme partie d'un couple de commande primaire de la régulation de la vitesse de rotation du moteur à combustion interne (VM).

13. Procédé selon l'une quelconque des revendications 1 à 12, **caractérisé en ce que** la deuxième phase est terminée (t = t3), lorsque le moteur à combustion interne (VM) a atteint sa vitesse de rotation cible (n_{VM_Z2}; n_{VM_Z3}) à l'intérieur d'une tolérance de vitesse de rotation différentielle prédéterminée (Δn_{T1}) (n_{VM} (t3) = n_{VM_Z2} ± Δn_{T1}: n_{VM}(t3) = n_{VM_Z3} ± Δn_{T1}) et lorsque le gradient de vitesse de rotation différentielle (*d*Δn_{K}/*d*t) à l'embrayage de séparation a atteint ou dépassé vers le bas en valeur un gradient de vitesse de rotation différentielle minimale fixé ((*d*Δn_{K}/*d*t)ₘᵢₙ) (|*d*Δn_{K}/*d*t| ≤ (*d*Δn_{K}/*d*t)ₘᵢₙ > 0), ou lorsque la différence entre le couple de rotation produit (M_{VM}) du moteur à combustion interne (VM) et le couple de rotation transmissible (M_{K}) de l'embrayage de séparation (K) a atteint ou a dépassé vers le bas en valeur un couple différentiel minimal fixé (ΔMₘᵢₙ) (|M_{VM} - M_{K}| ≤ ΔMₘᵢₙ > 0)

14. Procédé selon l'une quelconque des revendications 1 à 13, **caractérisé en ce que** la différence de vitesse de rotation cible (Δn_{K_Z1}) de la régulation de la vitesse de rotation de l'embrayage de séparation (K) est fixée à une valeur inférieure à la différence de vitesse de rotation (Δn_{K}) au début de la troisième phase (t = t3) (Δn_{K_Z1} < Δn_{K}(t3)).

15. Procédé selon la revendication 14, **caractérisé en ce que** la différence de vitesse de rotation de consigne (Δn_{K_cons}) de la régulation de la vitesse de rotation différentielle de l'embrayage de séparation (K) est abaissée, au début de la troisième phase (t = t3), en continu de la différence de vitesse de rotation actuelle (Δn_{K}(t3)) à la différence de vitesse de rotation cible (Δn_{K_Z1}).

16. Procédé selon l'une quelconque des revendications 1 à 15, **caractérisé en ce que** le couple de rotation actuel (M_{VM}) du moteur à combustion interne (VM) est utilisé, dans la troisième phase (t = t3 à t4), comme couple de commande primaire ou comme partie d'un couple de commande primaire de la régulation de la vitesse de rotation différentielle de l'embrayage de séparation (K).

17. Procédé selon l'une quelconque des revendications 1 à 16, **caractérisé en ce que** la troisième phase est terminée (t = t4), lorsque la différence de vitesse de rotation (Δn_{K}) à l'embrayage de séparation (K) a atteint la différence de vitesse de rotation cible (An_{K_Z1}) à l'intérieur d'une tolérance de vitesse de rotation différentielle prédéterminée (Δn_{T2}) (Δn_{K}(t4) = Δn_{K_Z1} ± Δn_{T2}).

18. Procédé selon l'une quelconque des revendications 1 à 17, **caractérisé en ce que** l'embrayage de séparation (K) est entièrement fermé (x_{K} = 1) dans la quatrième phase (t = t4 à t5), lorsqu'il n'est prévu aucune régulation du glissement permanent de l'embrayage de séparation (K), et en poursuivant la régulation de la vitesse de rotation différentielle, est réglé à une différence de vitesse de rotation cible plus basse, convenant pour un fonctionnement avec glissement permanent (Δn_{K_Z2}) (Δn_{K_Z2} < Δn_{K_Z1}), dans la mesure où il est prévu une régulation du glissement permanent de l'embrayage de séparation (K).
